# EUROPEAN PATENT APPLICATION

(11) **EP 4 541 449 A1**
(43) Date of publication of application: **23.04.2025**
(21) Application number: 23827150.6
(22) Date of filing: 19.06.2023
(51) Int. Cl.: B01D 53/04, C01B 32/50

(54) **REGENERATION METHOD FOR ACIDIC GAS ADSORPTION DEVICE, AND MANUFACTURING METHOD FOR ACIDIC GAS ADSORPTION DEVICE**

(30) Priority: 20.06.2022 JP 2022098602; 30.11.2022 JP 2022190913
(71) Applicant: NGK Insulators, Ltd., Nagoya-shi, Aichi 467-8530 (JP)
(72) Inventor: OKUMA Yusuke, Nagoya-shi, Aichi 467-8530 (JP); SHIBAGAKI Yukinari, Nagoya-shi, Aichi 467-8530 (JP); KAN Hirofumi, Nagoya-shi, Aichi 467-8530 (JP); IIDA Kazuki, Nagoya-shi, Aichi 467-8530 (JP); TORII Atsushi, Nagoya-shi, Aichi 467-8530 (JP); NAKAGAWA Kosuke, Nagoya-shi, Aichi 467-8530 (JP)
(74) Representative: MERH-IP Matias Erny Reichl Hoffmann Patentanwälte PartG mbB
(86) International application number: PCT/JP2023/022530
(87) International publication number: WO 2023/248967

(57) **Abstract**

Provided are a method of regenerating an acid gas adsorption device and a method of producing an acid gas adsorption device each capable of reducing a running cost. The method of regenerating an acid gas adsorption device according to an embodiment of the present invention includes the steps of: causing an acid gas to be adsorbed to an acid gas adsorption material by supplying the acid gas to an acid gas adsorption device so that the acid gas is brought into contact with an acid gas adsorption layer; causing the acid gas to be desorbed from the acid gas adsorption material; pulverizing the acid gas adsorption device, which has been subjected to the step of causing the acid gas to be adsorbed and the step of causing the acid gas to be desorbed, to provide a regenerated material powder; and molding a base material from the regenerated material powder to form an acid gas adsorption layer including an acid gas adsorption material on a surface of the base material.

## Description

### Technical Field

The present invention relates to a method of regenerating an acid gas adsorption device and a method of producing an acid gas adsorption device.

### Background Art

In recent years, an attempt has been made to separate and capture an acid gas in the atmosphere in order to reduce an environmental load. Such acid gas is, for example, carbon dioxide (hereinafter sometimes referred to as "CO₂"), which is a main cause of global warming. As a typical example of such attempt, a Carbon dioxide Capture, Utilization and Storage (CCUS) cycle has been known. As a carbon dioxide adsorption device to be used for such separation and capture of carbon dioxide, there has been proposed an absorbent structure for CO₂ capture including: a honeycomb substrate having a plurality of partition walls thereby forming a plurality of flow channels; and a functional mer group positioned in and on the partition walls (see, for example, Patent Literature 1). With such absorbent structure for CO₂ capture, CO₂ can be captured from a gas fluid flowing in the absorbent structure, and CO₂ having been captured can be desorbed therefrom under predetermined conditions. However, when CO₂ in the atmosphere is repeatedly adsorbed and desorbed with the absorbent structure for CO₂ capture described in Patent Literature 1, a CO₂ capture rate may be gradually reduced owing to impurities in the atmosphere and repetition of heat treatment. In this case, it is required that the entirety of the absorbent structure for CO₂ capture be replaced, resulting in a problem of an increase in running cost.

### Citation List

### Patent Literature

[PTL 1] WO 2013/119929 A1

### Summary of Invention

### Technical Problem

A primary object of the present invention is to provide a method of regenerating an acid gas adsorption device and a method of producing an acid gas adsorption device each capable of reducing a running cost.

### Solution to Problem

[1] A method of regenerating an acid gas adsorption device according to an embodiment of the present invention includes the steps of: causing an acid gas to be adsorbed to an acid gas adsorption material by supplying the acid gas to an acid gas adsorption device including a base material, and an acid gas adsorption layer arranged on a surface of the base material, the acid gas adsorption layer including the acid gas adsorption material, so that the acid gas is brought into contact with the acid gas adsorption layer; causing the acid gas to be desorbed from the acid gas adsorption material; pulverizing the acid gas adsorption device, which has been subjected to the step of causing the acid gas to be adsorbed and the step of causing the acid gas to be desorbed, to provide a regenerated material powder; and molding the base material from the regenerated material powder to form an acid gas adsorption layer including an acid gas adsorption material on the surface of the base material.
[2] In the method of regenerating an acid gas adsorption device according to the above-mentioned item [1], the acid gas may be carbon dioxide.
[3] In the method of regenerating an acid gas adsorption device according to the above-mentioned item [1] or [2], the base material may be a honeycomb-like base material including a partition wall configured to define a plurality of cells, and the acid gas adsorption layer may be formed on a surface of the partition wall.
[4] In the method of regenerating an acid gas adsorption device according to any one of the above-mentioned items [1] to [3], a material for forming the base material is selected from cordierite, alumina, mullite, silicon carbide, a silicon-silicon carbide-based composite material, silicon nitride, and a combination thereof.
[5] In the method of regenerating an acid gas adsorption device according to any one of the above-mentioned items [1] to [4], the acid gas adsorption material is selected from a nitrogen-containing compound, a metal organic framework, activated carbon, nitrogen-doped carbon, an alkali compound, a carbonate salt, a hydrogen carbonate salt, zeolite, an ionic liquid, and a combination thereof.
[6] In the method of regenerating an acid gas adsorption device according to any one of the above-mentioned items [1] to [5], the acid gas adsorption layer may further include a porous carrier.
[7] In the method of regenerating an acid gas adsorption device according to any one of the above-mentioned items [1] to [6], the acid gas adsorption layer may include: particles each including at least the acid gas adsorption material; and an organic binder capable of binding the particles. The organic binder may be soluble in an aprotic polar solvent, and may be substantially insoluble in a protic polar solvent.
[8] The method of regenerating an acid gas adsorption device according to the above-mentioned item [7] may further include the steps of: dissolving the organic binder in the aprotic polar solvent by bringing the aprotic polar solvent into contact with the regenerated material powder including the organic binder; and precipitating the organic binder by adding the protic polar solvent to an organic binder solution obtained by dissolving the organic binder in the aprotic polar solvent, to recover the organic binder. In this case, the molding may include forming an acid gas adsorption layer including the recovered organic binder and the particles each including at least the acid gas adsorption material on the surface of the base material molded from the regenerated material powder.
[9] A method of producing an acid gas adsorption device according to another aspect of the present invention includes the steps of: causing an acid gas to be adsorbed to an acid gas adsorption material by supplying the acid gas to an acid gas adsorption device including a base material, and an acid gas adsorption layer arranged on a surface of the base material, the acid gas adsorption layer including the acid gas adsorption material, so that the acid gas is brought into contact with the acid gas adsorption layer; causing the acid gas to be desorbed from the acid gas adsorption material; pulverizing the acid gas adsorption device, which has been subjected to the step of causing the acid gas to be adsorbed and the step of causing the acid gas to be desorbed, to provide a regenerated material powder; and molding the base material from the regenerated material powder to form an acid gas adsorption layer including an acid gas adsorption material on the surface of the base material.

### Advantageous Effects of Invention

According to the embodiments of the present invention, the method of regenerating an acid gas adsorption device and the method of producing an acid gas adsorption device each capable of reducing a running cost can be achieved.

### Brief Description of Drawings

FIG. 1 is a schematic perspective view of a carbon dioxide adsorption device according to one embodiment of the present invention.
FIG. **2** is a schematic sectional view of the carbon dioxide adsorption device of FIG. **1****.**
FIG. **3** is a schematic perspective view of a regenerated base material molded from regenerated material powder obtained by pulverizing the carbon dioxide adsorption device of FIG. **1****.**

### Description of Embodiments

Embodiments of the present invention are described below with reference to the drawings. However, the present invention is not limited to these embodiments.

### A. Overview of Method of Regenerating Acid Gas Adsorption Device

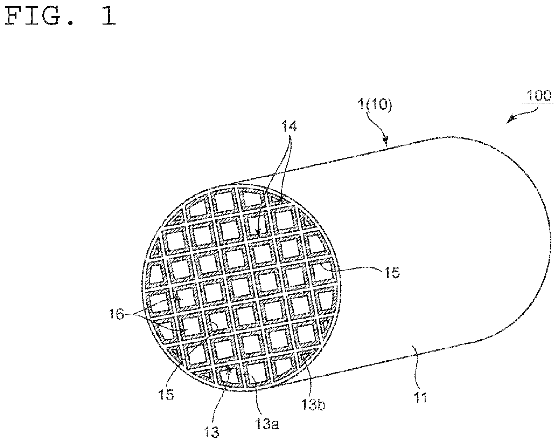

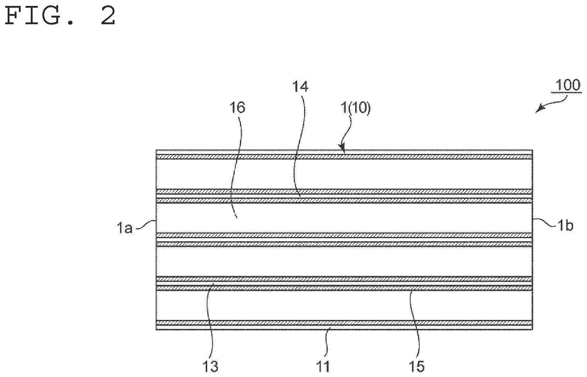

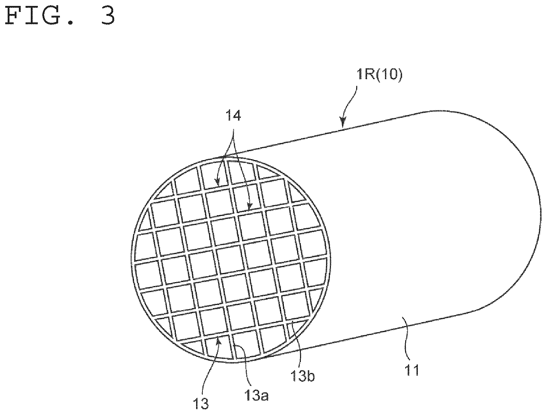

FIG. **1** is a schematic perspective view of a carbon dioxide adsorption device according to one embodiment of the present invention. FIG. **2** is a schematic sectional view of the carbon dioxide adsorption device of FIG. **1****.** FIG. **3** is a schematic perspective view of a regenerated base material molded from regenerated material powder obtained by pulverizing the carbon dioxide adsorption device of FIG. **1****.**

A method of regenerating an acid gas adsorption device according to one embodiment of the present invention includes: a step (adsorption step) of causing an acid gas to be adsorbed to an acid gas adsorption material by supplying the acid gas to an acid gas adsorption device **100** including a base material 1, and an acid gas adsorption layer **15** arranged on a surface of the base material **1,** the acid gas adsorption layer **15** including the acid gas adsorption material, so that the acid gas is brought into contact with the acid gas adsorption layer **15;** a step (desorption step) of causing the acid gas to be desorbed from the acid gas adsorption material; a step (pulverizing step) of pulverizing the acid gas adsorption device **100,** which has been subjected to the adsorption step and the desorption step, to provide a regenerated material powder; and a step (reformation step) of molding the base material **1** from the regenerated material powder to form an acid gas adsorption layer **15** including an acid gas adsorption material on the surface of the base material **1.**

The inventors of the present invention have found that material powder obtained by pulverizing the acid gas adsorption device, which has been subjected to the adsorption step and the desorption step, can be reused as a raw material of the base material as it is, and thus have completed the present invention. More specifically, the base material is molded from regenerated material powder obtained by pulverizing the acid gas adsorption device, which has been subjected to the adsorption step and the desorption step, to form an acid gas adsorption layer on the surface of the base material. Thus, the acid gas adsorption device can be regenerated (produced) at lower cost than that in the case where the base material is produced from a new raw material. Accordingly, even when the adsorption and desorption of the acid gas are performed over a long time period by repeating the replacement of the acid gas adsorption device, a running cost can be significantly reduced.

Examples of the acid gas include carbon dioxide (CO₂), hydrogen sulfide, sulfur dioxide, nitrogen dioxide, and hydrogen chloride.

In one embodiment, the acid gas is carbon dioxide (CO₂). In this embodiment, the acid gas adsorption device **100** is a carbon dioxide adsorption device **100,** the acid gas adsorption layer **15** is a carbon dioxide adsorption layer **15,** and the acid gas adsorption material is a carbon dioxide adsorption material. The carbon dioxide adsorption device **100** serving as one embodiment of the acid gas adsorption device is described in detail below.

### B. Carbon Dioxide Adsorption Device

As described above, the carbon dioxide adsorption device **100** includes the base material **1** and the carbon dioxide adsorption layer **15.** The structure of the base material **1** is not particularly limited, and is, for example, a honeycomb-like structure, a filter structure such as a filtration cloth, or a pellet structure. The carbon dioxide adsorption layer 15 is not particularly limited as long as the carbon dioxide adsorption layer is arranged on the surface of any such base material **1.**

### B-1. Base Material (Honeycomb-like Base Material)

In one embodiment, the base material **1** is a honeycomb-like base material **10** including a plurality of cells **14.**

The cells **14** each extend from a first end surface **1a** (inflow end surface) of the honeycomb-like base material 10 to a second end surface **1b** (outflow end surface) thereof in a length direction (axial direction) of the honeycomb-like base material **10** (see FIG. **2****).** The cells **14** each have any appropriate shape in a cross section in a direction perpendicular to the length direction of the honeycomb-like base material **10.** The sectional shapes of the cells are each, for example, a triangle, a quadrangle, a pentagon, a hexagon, a higher polygon, a circle, or an ellipse. The sectional shapes and sizes of the cells may be all the same, or may be at least partly different. Of such sectional shapes of the cells, a hexagon or a quadrangle is preferred, and a square, a rectangle, or a hexagon is more preferred.

A cell density in a cross section in the direction perpendicular to the length direction of the honeycomb-like base material (i.e., the number of the cells **14** per unit area) may be appropriately set depending on the purposes. The cell density may be, for example, from 4 cells/cm² to 320 cells/cm². When the cell density falls within such range, the strength and effective geometric surface area (GSA) of the honeycomb-like base material can be sufficiently ensured.

The honeycomb-like base material **10** has any appropriate shape (overall shape). The shape of the honeycomb-like base material is, for example, a cylinder with a circle as its bottom, an elliptic cylinder with an ellipse as its bottom, a prismatic column with a polygon as its bottom, or a column with an indefinite shape as its bottom. The honeycomb-like base material **10** of the illustrated example has a cylindrical shape. The outer diameter and length of the honeycomb-like base material may be appropriately set depending on the purposes. Although not shown, the honeycomb-like base material may have a hollow area in a center portion thereof in a cross section in the direction perpendicular to the length direction.

The honeycomb-like base material **10** typically includes: an outer peripheral wall **11;** and a partition wall 13 positioned inside the outer peripheral wall **11.** In the illustrated example, the outer peripheral wall **11** and the partition wall **13** are integrally formed. The outer peripheral wall **11** and the partition wall **13** may be separate bodies.

The outer peripheral wall **11** has a cylindrical shape. The thickness of the outer peripheral wall **11** may be set to any appropriate thickness. The thickness of the outer peripheral wall **11** is, for example, from 0.1 mm to 10 mm.

The partition wall **13** defines the plurality of cells **14.** More specifically, the partition wall **13** has a first partition wall **13a** and a second partition wall **13b** perpendicular to each other, and the first partition wall **13a** and the second partition wall **13b** define the plurality of cells **14.** The sectional shapes of the cells **14** are each a quadrangle except for a portion in which the first partition wall **13a** and the second partition wall **13b** are each brought into contact with the outer peripheral wall **11.** The configuration of the partition wall is not limited to the partition wall **13** described above. The partition wall may have a first partition wall extending in a radial direction and a second partition wall extending in a circumferential direction, which define a plurality of cells.

The thickness of the partition wall **13** may be appropriately set depending on the applications of the honeycomb-like base material. The thickness of the partition wall **13** is typically smaller than the thickness of the outer peripheral wall **11.** The thickness of the partition wall **13** is, for example, from 0.03 mm to 0.6 mm. The thickness of the partition wall is measured, for example, through sectional observation with a scanning electron microscope (SEM). When the thickness of the partition wall falls within such range, the honeycomb-like base material can achieve sufficient mechanical strength, and can also achieve a sufficient opening area (total area of the cells in a cross section).

The porosity of the partition wall **13** may be appropriately set depending on the purposes. The porosity of the partition wall **13** is, for example, 15% or more, preferably 20% or more, and is, for example, 70% or less, preferably 45% or less. The porosity may be measured, for example, by mercury porosimetry.

The density of the partition wall **13** may be appropriately set depending on the purposes. The density is, for example, 1.7 g/cm³ or more, preferably 1.8 g/cm³ or more, and is, for example, 2.6 g/cm³ or less, preferably 2.8 g/cm³ or less. The density may be measured, for example, by mercury porosimetry.

A material for forming the partition wall **13** is typically, for example, a ceramic. Examples of the ceramic include silicon carbide, a silicon-silicon carbide-based composite material, cordierite, mullite, alumina, silicon nitride, spinel, a silicon carbide-cordierite-based composite material, lithium aluminum silicate, and aluminum titanate. Those materials for forming the partition walls may be used alone or in combination thereof. Of those materials for forming the partition walls, cordierite, alumina, mullite, silicon carbide, a silicon-silicon carbide-based composite material, and silicon nitride are preferred, and silicon carbide and a silicon-silicon carbide-based composite material are more preferred.

Such honeycomb-like base material **10** is typically produced by the following method. First, a binder and water or an organic solvent are added to material powder including ceramic powder described above as required. The resultant mixture is kneaded to provide a body, and the body is molded into a desired shape. After that, the body is dried, and is fired as required. Thus, the honeycomb-like base material **10** is produced. A method of producing the honeycomb-like base material is described in detail in the description of the reformation step in the section E.

### B-2. Carbon Dioxide Adsorption Layer

In one embodiment, the carbon dioxide adsorption layer **15** is formed on the surface of the partition wall **13.** In the honeycomb-like base material **10,** a gas flow passage **16** is formed in a portion (typically, a center portion) in a cross section of the cell **14** in which the carbon dioxide adsorption layer **15** is not formed. The carbon dioxide adsorption layer **15** may be formed on the entire inner surface of the partition wall **13** (i.e., so as to surround the gas flow passage **16)** as in the illustrated example, or may be formed on part of the surface of the partition wall. When the carbon dioxide adsorption layer **15** is formed on the entire inner surface of the partition wall **13,** CO₂ removal efficiency can be improved.

The gas flow passage **16** extends from the first end surface **1a** (inflow end surface) to the second end surface **1b** (outflow end surface) as with the cells **14.** Examples of the sectional shape of the gas flow passage **16** include the same sectional shapes as those of the cells **14** described above. Of those, a hexagon or a quadrangle is preferred, and a square, a rectangle, or a hexagon is more preferred. The sectional shapes and sizes of the respective gas flow passages **16** may be all the same, or may be at least partly different.

The thickness of the carbon dioxide adsorption layer **15** is not particularly limited, but is, for example, 10 µm or more, preferably 50 µm or more, and is, for example, 1,000 µm or less, preferably 500 µm or less.

### B-2-1. Carbon Dioxide Adsorption Layer formed of Carbon Dioxide Adsorption Material

The carbon dioxide adsorption layer **15** includes the carbon dioxide adsorption material serving as an example of the acid gas adsorption material. In one embodiment, the carbon dioxide adsorption layer is formed of the carbon dioxide adsorption material, and is directly supported by the partition wall to face the gas flow passage.

Any appropriate compound capable of adsorbing and desorbing CO₂ may be adopted as the carbon dioxide adsorption material. Examples of the carbon dioxide adsorption material include: nitrogen-containing compounds described later; alkali compounds, such as sodium hydroxide and potassium hydroxide; carbonate salts, such as calcium carbonate and potassium carbonate; hydrogen carbonate salts, such as calcium hydrogen carbonate and potassium hydrogen carbonate; metal organic flameworks (MOF), such as MOF-74, MOF-200, and MOF-210; zeolite; activated carbon; nitrogen-doped carbon; and an ionic liquid.

Of those carbon dioxide adsorption materials, a nitrogen-containing compound is more preferred. More specific examples of the nitrogen-containing compound include: amine compounds, such as monoethanolamine, diethanolamine, triethanolamine, N-(3-aminopropyl)diethanolamine, aminopropyltrimethoxysilane, polyvinylamine, methyldiethylamine, and tetraethylenepentamine; piperazine compounds such as 1-(2-hydroxyethyl) piperazine; aminosilane coupling agents, such as polyethylenimine-trimethoxysilane, aminopropyltrimethoxysilane, 3-aminopropyltriethoxysilane, and N-(2-aminoethyl)-3-aminopropyl-trimethoxysilane; organic polymers having a primary amino group to a tertiary amino group, such as polyethylenimine, polyamidoamine, and polystyrene to which an amino group is added; organic monomers having a primary amino group to a tertiary amino group, such as ethylenimine and styrene to which an amino group is added; and organic/inorganic compounds to each of which an amino group is added as a substituent. Those carbon dioxide adsorption materials may be used alone or in combination thereof.

In this embodiment, the carbon dioxide adsorption layer is substantially free of any component other than the carbon dioxide adsorption material. When the carbon dioxide adsorption layer is formed of the carbon dioxide adsorption material, the content ratio of the carbon dioxide adsorption material in the carbon dioxide adsorption layer is typically 95.0 mass% or more and 100 mass% or less. When the content ratio of the carbon dioxide adsorption material falls within the above-mentioned range, an excellent CO₂ capture rate can be stably ensured.

The carbon dioxide adsorption layer may include an ionic liquid. In this case, the carbon dioxide adsorption layer preferably includes an ionic liquid and a carbon dioxide adsorption material except the ionic liquid (hereinafter referred to as "other carbon dioxide adsorption material"). The other carbon dioxide adsorption material (e.g., a nitrogen-containing compound) is typically coated with the ionic liquid. Accordingly, an improvement in performance of the carbon dioxide adsorption material and an increase in lifetime thereof can be achieved.

The ionic liquid is a "salt" of a liquid formed only of an ion (an anion or a cation), and is in a liquid state under normal temperature and normal pressure (23°C, 0.1 MPa). Examples of the cation of the ionic liquid include: ammonium-based ions, such as imidazolium salts or pyridinium salts; phosphonium-based ions; sulfonium salts; and inorganic ions. Examples of the anion of the ionic liquid include: halogen-based anions, such as a bromide ion and a triflate; boron-based anions such as a tetraphenylborate; phosphorus-based anions such as a hexafluorophosphate; and sulfur-based anions such as an alkyl sulfonate. Such ionic liquids may be used alone or in combination thereof. Of the ionic liquids, a combination of an imidazolium salt serving as the cation and a triflate serving as the anion is preferred.

The content ratio of the ionic liquid is, for example, 0.000001 part by mass or more, preferably 0.00001 part by mass or more, and is, for example, 0.1 part by mass or less, preferably 0.05 part by mass or less with respect to 1 part by mass of the other carbon dioxide adsorption material. When the content ratio of the ionic liquid falls within the above-mentioned ranges, an improvement in performance of the carbon dioxide adsorption material and an increase in lifetime thereof can be stably achieved.

### B-2-2. Carbon Dioxide Adsorption Layer including Carbon Dioxide Adsorption Material and Porous Body

In one embodiment, the carbon dioxide adsorption layer further includes a porous carrier in addition to the above-mentioned carbon dioxide adsorption material. In this case, the carbon dioxide adsorption material is typically supported by the porous carrier to face the gas flow passage. When the carbon dioxide adsorption layer includes the porous carrier, the escape of the carbon dioxide adsorption material from the carbon dioxide adsorption layer can be suppressed in the adsorption step and/or the desorption step.

The porous carrier may form mesopores in the carbon dioxide adsorption layer. Examples of the porous carrier include: metal organic frameworks (MOF), such as MOF-74, MOF-200, and MOF-210; activated carbon; nitrogen-doped carbon; mesoporous silica; mesoporous alumina; zeolite; and a carbon nanotube. Of those, metal organic frameworks (MOF), activated carbon, zeolite, mesoporous silica, and mesoporous alumina are preferred. The porous carriers may be used alone or in combination thereof. Of those, a material different from the carbon dioxide adsorption material is preferably adopted as the porous carrier.

The BET specific surface area of the porous carrier is, for example, 50 m²/g or more, preferably 500 m²/g or more. When the surface area of the porous carrier is equal to or more than the above-mentioned lower limits, the carbon dioxide adsorption material can be stably supported, and an increase in CO₂ capture rate can be achieved. The upper limit of the BET specific surface area of the porous carrier is typically 2,000 m²/g or less.

When the carbon dioxide adsorption layer includes the carbon dioxide adsorption material and the porous carrier, the content ratio of the total of the carbon dioxide adsorption material and the porous carrier in the carbon dioxide adsorption layer is, for example, 30 mass% or more, preferably 50 mass% or more, and is, for example, 100 mass% or less, preferably 99 mass% or less.

In this embodiment, the content ratio of the carbon dioxide adsorption material in the carbon dioxide adsorption layer is, for example, 30 mass% or more, preferably 50 mass% or more, and is, for example, 99 mass% or less. The content ratio of the porous carrier in the carbon dioxide adsorption layer is, for example, 0.1 mass% or more, preferably 10 mass% or more, and is, for example, 70 mass% or less, preferably 50 mass% or less. In addition, the content ratio of the porous carrier is, for example, 0.01 part by mass or more, preferably 0.3 part by mass or more, and is, for example, 0.7 part by mass or less, preferably 0.5 part by mass or less with respect to 1 part by mass of the carbon dioxide adsorption material. When the content ratio of the porous carrier falls within the above-mentioned ranges, the carbon dioxide adsorption material can be more stably supported.

Those carbon dioxide adsorption layers are each typically produced by the following method. The above-mentioned carbon dioxide adsorption material is dissolved in a solvent to prepare a solution of the carbon dioxide adsorption material. In addition, the above-mentioned porous carrier is added to the solvent as required. The order of addition of the carbon dioxide adsorption material and the porous carrier is not particularly limited. After that, the solution of the carbon dioxide adsorption material is applied onto the base material (specifically, the partition wall), and the coating film is then dried, followed by sintering as required, to thereby form a carbon dioxide adsorption layer.

Alternatively, a dispersion liquid including the carbon dioxide adsorption material except the ionic liquid and the porous carrier is applied onto the base material, and the coating film is then dried, and is sintered as required. After that, only the ionic liquid is applied to the base material. Thus, the carbon dioxide adsorption layer is formed.

A method of producing the carbon dioxide adsorption layer including the carbon dioxide adsorption material and the porous carrier is not limited to the above-mentioned method. For example, a dispersion liquid of the above-mentioned porous carrier in which the porous carrier is dispersed in a dispersion medium is prepared. The dispersion liquid is applied onto the base material, and the coating film is then dried, followed by sintering, to thereby form a carrier-containing film. After that, the carbon dioxide adsorption material in a liquid form under normal temperature and normal pressure or a solution of the carbon dioxide adsorption material is applied to the carrier-containing film. Thus, the carbon dioxide adsorption material penetrates into, and is supported by, the porous carrier of the carrier-containing film to form the carbon dioxide adsorption layer.

A method of forming the carbon dioxide adsorption layer is described in detail in the description of the reformation step in the section **E.**

### B-2-3. Carbon Dioxide Adsorption Layer including Carbon Dioxide-adsorbable Particles and Organic Binder

In another embodiment, the carbon dioxide adsorption layer includes: particles each including at least the above-mentioned carbon dioxide adsorption material; and an organic binder. The particles each including the above-mentioned carbon dioxide adsorption material each have a carbon dioxide adsorption ability, and are hereinafter referred to as "carbon dioxide-adsorbable particles." The organic binder is capable of binding the carbon dioxide-adsorbable particles, and is typically fixed to the base material. The organic binder is soluble in an aprotic polar solvent, and is substantially insoluble in a protic polar solvent. That is, the organic binder has resistance to water (water resistance), which is a protic polar solvent. The organic binder is substantially insoluble in the protic polar solvent and has water resistance, and hence, for example, swelling of the organic binder caused by water vapor in the atmosphere can be suppressed. Accordingly, volume expansion and/or a reduction in strength of the organic binder can be suppressed. Besides, a structure in which the organic binder binds and retains the carbon dioxide-adsorbable particles can be prevented from being changed. As a result, an excellent carbon dioxide adsorption ability can be maintained irrespective of the usage environment.

The surface of the carbon dioxide adsorption layer on the opposite side to the base material preferably has a three-dimensional network structure or a porous lamellar structure. Accordingly, the acid gas such as carbon dioxide can be efficiently diffused from the surface of the carbon dioxide adsorption layer to an inside thereof. In particular, the organic binder has water resistance, and hence the carbon dioxide adsorption layer can stably maintain such microstructure on the surface thereof that can be brought into contact with the acid gas irrespective of the usage environment.

The carbon dioxide-adsorbable particles are each typically in a solid state under normal temperature and normal pressure (23°C, 0.1 MPa). The carbon dioxide adsorption layer includes a plurality of carbon dioxide-adsorbable particles. The carbon dioxide-adsorbable particles, under a state of being incorporated in the carbon dioxide adsorption layer, may be primary particles, or may be secondary particles in which a plurality of primary particles aggregate.

In one embodiment, the carbon dioxide-adsorbable particles each include: the above-mentioned carbon dioxide adsorption material; and a carrier for supporting the carbon dioxide adsorption material. However, in some cases, the carbon dioxide-adsorbable particles are each formed only of the carbon dioxide adsorption material, and the carrier is not included therein. That is, acid gas-adsorbable particles may be formed only of a carbon dioxide adsorption material that is a solid under normal temperature and normal pressure.

Of the carbon dioxide adsorption materials in the carbon dioxide-adsorbable particles, the above-mentioned nitrogen-containing compound is preferred, and the above-mentioned organic monomers having a primary amino group to a tertiary amino group, and the above-mentioned organic polymers having a primary amino group to a tertiary amino group are more preferred. The weight average molecular weight M_{w} (in terms of polystyrene) of the organic polymer is, for example, 1,000 or more, preferably 50,000 or more, and is, for example, 1,000,000 or less, preferably 300,000 or less.

In one embodiment, the carbon dioxide adsorption material in each of the carbon dioxide-adsorbable particles is substantially insoluble in the protic polar solvent (typically, water) and the aprotic polar solvent.

The solubility of the carbon dioxide adsorption material in water is, for example, 0.1 g/100 g-H₂O or less, preferably 0.05 g/100 g-H₂O or less. When the solubility of the carbon dioxide adsorption material in water is equal to or less than the above-mentioned upper limits, excellent water resistance can be stably imparted to the carbon dioxide adsorption device. The lower limit of the solubility of the carbon dioxide adsorption material in water is typically 0.01 g/100 g-H₂O or more.

The solubility of the carbon dioxide adsorption material in the aprotic polar solvent is, for example, 1 g/100 g-aprotic polar solvent or less, preferably 0.5 g/100 g-aprotic polar solvent or less. When the solubility of the carbon dioxide adsorption material in the aprotic polar solvent is equal to or less than the above-mentioned upper limits, the dissolution of the carbon dioxide adsorption material in the aprotic polar solvent can be suppressed at the time of the production of the carbon dioxide adsorption device. The lower limit of the solubility of the carbon dioxide adsorption material in the aprotic polar solvent is typically 0.01 g/100 g-aprotic polar solvent or more.

The solubility parameter of the carbon dioxide adsorption material is, for example, 7 or more, preferably 8 or more, and is, for example, 20 or less, preferably 15 or less. The solubility parameter may be calculated, for example, by a Hildebrand method.

Any appropriate carrier capable of supporting the carbon dioxide adsorption material may be adopted as the carrier. The carrier is preferably the above-mentioned porous carrier. In addition, from the viewpoint of thermal conductivity, a metal material may be adopted. Examples thereof include: iron and steel materials, such as carbon steel and alloy steel; and nonferrous metals, such as copper, aluminum, and nickel, and alloys thereof. In the case of the metal material, the shape of the carrier is not limited to a porous shape.

Any appropriate organic compound capable of binding the carbon dioxide-adsorbable particles may be adopted as the organic binder. The organic binder is soluble in the aprotic polar solvent, and is substantially insoluble in the protic polar solvent. Examples of the organic binder include: fluoropolymers, such as polyvinylidene fluoride (PVDF), polytetrafluoroethylene (PTFE), a perfluoroalkoxy alkane (PFA), a perfluoroethylene propene copolymer (FEP), and an ethylene tetrafluoroethylene copolymer (ETFE) ; and amorphous plastics such as polyethersulfone (PES). Those organic binders may be used alone or in combination thereof.

Of those organic binders, organic binders for each of which at least water is a poor solvent (organic binders each substantially insoluble in water) are preferred, fluoropolymers are more preferred, and polyvinylidene fluoride is still more preferred. When the organic binder includes the fluoropolymer (polyvinylidene fluoride), excellent heat resistance and water resistance can be imparted to the carbon dioxide adsorption device.

The solubility of the organic binder in the protic polar solvent (typically, water) is, for example, 0.1 g/100 g-protic polar solvent or less, preferably 0.05 g/100 g-protic polar solvent or less. When the solubility of the organic binder in the protic polar solvent (typically, water) is equal to or less than the above-mentioned upper limits, excellent water resistance can be stably imparted to the acid gas adsorption device. The lower limit of the solubility of the organic binder in the protic polar solvent (typically, water) is typically 0.01 g/100 g-H₂O or more.

The solubility parameter of the organic binder is, for example, 9 or more, preferably 10 or more, and is, for example, 15 or less, preferably 13 or less.

The carbon dioxide adsorption layer may include any appropriate additive in addition to the carbon dioxide-adsorbable particles and the organic binder.

The total content ratio of the carbon dioxide-adsorbable particles and the organic binder in the carbon dioxide adsorption layer is, for example, 30 vol% or more, preferably 50 vol% or more, and is, for example, 100 vol% or less, preferably 99 vol% or less. The volume percentage may be measured, for example, through microstructure observation and elemental analysis.

The content ratio of the carbon dioxide-adsorbable particles in the carbon dioxide adsorption layer is, for example, 5 vol% or more, preferably 30 vol% or more. When the content ratio of the carbon dioxide-adsorbable particles is equal to or more than the above-mentioned lower limits, the carbon dioxide adsorption performance of the carbon dioxide adsorption device can be sufficiently ensured. The upper limit of the content ratio of the carbon dioxide-adsorbable particles is typically 85 vol% or less.

The content ratio of the organic binder in the carbon dioxide adsorption layer is, for example, 5 vol% or more, preferably 15 vol% or more. When the content ratio of the organic binder is equal to or more than the above-mentioned lower limits, the escape of the carbon dioxide-adsorbable particles from the carbon dioxide adsorption layer can be suppressed in the adsorption step and/or the desorption step described later. The upper limit of the content ratio of the organic binder is typically 70 vol% or less.

The carbon dioxide adsorption layer typically has pores communicating to each other. The porosity of the carbon dioxide adsorption layer is, for example, 10% or more and 90% or less, preferably 10% or more and 60% or less, more preferably 15% or more and 40% or less.

The carbon dioxide adsorption layer including the carbon dioxide-adsorbable particles and the organic binder may be typically produced by the following method. First, a binder solution is prepared by dissolving the above-mentioned organic binder in the aprotic polar solvent, and the above-mentioned carbon dioxide-adsorbable particles are dispersed in the binder solution. After that, the binder solution is applied to the surface of the base material to form a precursor film, and the aprotic polar solvent in the precursor film is replaced with a poor solvent for the organic binder. Thus, the carbon dioxide adsorption layer is formed. A method of forming the carbon dioxide adsorption layer is described in detail in the description of the reformation step in the section E.

In addition, a method of producing the carbon dioxide adsorption layer including the carbon dioxide-adsorbable particles and the organic binder is not limited to the above-mentioned method. For example, the carbon dioxide adsorption layer may be formed by: dispersing the above-mentioned porous carrier in the above-mentioned binder solution; applying the binder solution to the surface of the base material to form a precursor film; then replacing the aprotic polar solvent in the precursor film with a poor solvent for the organic binder to form a carrier-containing film including the porous carrier and the organic binder; and subsequently causing the carbon dioxide adsorption material to be supported by the porous carrier in the carrier-containing film.

Such carbon dioxide adsorption device 100 may be included in carbon dioxide adsorption equipment, though the equipment is not shown. In one embodiment, the carbon dioxide adsorption equipment includes: a plurality of carbon dioxide adsorption devices; a fan for supplying a gas including CO₂ (CO₂-containing gas) to the carbon dioxide adsorption layer; and a pump for sucking CO₂ separated from the carbon dioxide adsorption layer.

### C. Adsorption Step and Desorption Step

As described above, the method of regenerating a carbon dioxide adsorption device according to one embodiment includes: an adsorption step of causing CO₂ to be adsorbed to the carbon dioxide adsorption material in the carbon dioxide adsorption device 100; and a desorption step of causing CO₂ to be desorbed from the carbon dioxide adsorption material.

In the adsorption step, a CO₂-containing gas is typically caused to flow through the gas flow passage 16 so that CO₂ is brought into contact with the carbon dioxide adsorption layer 15. The CO₂-containing gas typically includes nitrogen in addition to CO₂. In one embodiment, the CO₂-containing gas is air (atmosphere). The concentration of CO₂ in the CO₂-containing gas is, for example, 100 ppm or more and 2 vol% or less. The temperature of the CO₂-containing gas in the adsorption step is, for example, 0°C or more and 40°C or less. The pressure of the CO₂-containing gas in the adsorption step is, for example, 0.3×10⁵ Pa or more and 2.0×10⁵ Pa or less. The relative humidity RH of the CO₂-containing gas in the adsorption step is, for example, 10%RH or more and 60%RH or less. The operation time period of the adsorption step is, for example, 15 minutes or more and 3 hours or less. The flow rate of the CO₂-containing gas in the adsorption step is, for example, 0.5 m/sec or more and 5 m/sec or less.

Thus, the carbon dioxide adsorption material present so as to face the gas flow passage 16 adsorbs CO₂. The CO₂ capture rate in the adsorption step (=100-(concentration of CO₂ in gas having passed through gas flow passage/concentration of CO₂ in gas before flowing into gas flow passagex100)) is, for example, 80% or more, preferably 85% or more, more preferably 90% or more, and is, for example, 100% or less.

The desorption step (sometimes referred to as "detachment step") is performed after the adsorption step. In the desorption step, typically, the carbon dioxide adsorption device is heated, and CO₂ thus separated is captured through suction with, for example, a pump. Alternatively, CO₂ having been captured is loaded in the carbon dioxide adsorption device again, the carbon dioxide adsorption device is heated, and CO₂ thus separated is captured.

The temperature in the desorption step is, for example, more than 40°C, preferably 70°C or more, and is, for example, 200°C or less, preferably 110°C or less. The operation time period of the desorption step is, for example, 1 minute or more and 1 hour or less.

Thus, CO₂ retained by the carbon dioxide adsorption material is desorbed (released, detached) from the carbon dioxide adsorption material. Accordingly, CO₂ can be captured, and can be utilized in various applications (e.g., methanation).

The adsorption step and the desorption step are preferably performed repeatedly. In one embodiment, a cycle of the adsorption step and the desorption step is performed, for example, 10 times or more, preferably 30 times or more, more preferably 50 times or more, still more preferably 100 times or more.

### D. Pulverizing Step

In one embodiment, after the adsorption step and the desorption step are performed (preferably, the cycle of the adsorption step and the desorption step is performed a number of times within the above-mentioned ranges), the pulverizing step is performed. In addition, the pulverizing step may be performed after the CO₂ capture rate in the adsorption step becomes smaller than the above-mentioned lower limits.

In the pulverizing step, the carbon dioxide adsorption device 100, which has been subjected to the adsorption step and the desorption step, is pulverized. Any appropriate method may be adopted as a pulverization method for the carbon dioxide adsorption device depending on a material of the base material. Examples of the pulverization method include methods using a hammer mill, a roller mill, a jet mill, and a ball mill.

Thus, regenerated material powder is obtained. The regenerated material powder includes a component derived from the base material (e.g., ceramic powder) and a component derived from the carbon dioxide adsorption layer (e.g., the carbon dioxide adsorption material, the porous carrier, or the organic binder).

The particle diameter of the regenerated material powder is, for example, 0.1 µm or more, preferably 1.0 µm or more, and is, for example, 500 µm or less, preferably 50 µm or less. When the particle diameter of the regenerated material powder falls within the above-mentioned ranges, the base material (honeycomb-like base material) can be stably molded from the regenerated material powder.

### E. Reformation Step

In the reformation step, first, a binder, water or an organic solvent, or a surfactant, a pH control agent, and a sintering aid are added to the regenerated material powder obtained in the pulverizing step as required, and the mixture is kneaded. Thus, a regenerated body or a regenerated slurry is prepared.

Examples of the binder include a heat-curable polysaccharide thickener and methyl cellulose having hot gelation characteristics. Of those, methyl cellulose is preferred. The binders may be used alone or in combination thereof. The addition ratio of the binder is, for example, 0 parts by mass or more, preferably 0.1 part by mass or more, and is, for example, 30 parts by mass or less, preferably 10 parts by mass or less with respect to 100 parts by mass of the regenerated material powder.

Next, as illustrated in FIG. 3, the regenerated material powder, the regenerated body, or the regenerated slurry is molded into a desired shape (typically, a honeycomb shape). Any appropriate molding method may be adopted as a molding method. Examples of the molding method include extrusion molding, freeze molding, heat molding, pressure molding, a spray drying method, and a fluidized bed granulation method. Of those, extrusion molding is preferred.

After that, the molded body is dried as required. Thus, a base material 1 including the regenerated material powder (hereinafter referred to as "regenerated base material 1R") is produced.

The regenerated base material 1R is preferably fired after the drying. Thus, a combustible component (e.g., the carbon dioxide adsorption material or the binder) in the regenerated base material is burned down. As a result, a pore is formed, and hence a high specific surface area can be expected.

A firing temperature is, for example, 1,200°C or more, preferably 1,300°C or more, and is, for example, 2,200°C or less, preferably 1,500°C or less. A firing time period is, for example, 1 hour or more, preferably 2 hours or more, and is, for example, 100 hours or less, preferably 20 hours or less.

Next, the carbon dioxide adsorption layer **15** is newly formed on a surface of the produced regenerated base material **1R** (typically, the partition wall **13).** When a carbon dioxide adsorption layer including the porous carrier is formed, first, the above-mentioned porous carrier is added to be dispersed in a solvent to prepare a dispersion slurry liquid of the porous carrier. Examples of the solvent include water, alcohols, and diols. Those solvents may be used alone or in combination thereof. Of those solvents, a water-based solvent (water or a mixed solvent including water) is preferred.

The concentration of the porous carrier in the dispersion slurry liquid is, for example, 10 mass% or more, preferably 15 mass% or more, and is, for example, 50 mass% or less, preferably 30 mass% or less. When the concentration of the porous carrier is adjusted to fall within the above-mentioned ranges, the carbon dioxide adsorption layer can be stably formed on the regenerated base material.

Next, the carbon dioxide adsorption material is added to the dispersion slurry liquid. The concentration of the carbon dioxide adsorption material in the dispersion slurry liquid is, for example, 5 mass% or more, preferably 10 mass% or more, and is, for example, 30 mass% or less, preferably 20 mass% or less.

Next, the dispersion slurry liquid including the porous carrier and the carbon dioxide adsorption material is applied onto the regenerated base material **1R** (specifically, the partition wall 13) by any appropriate method. In one embodiment, the dispersion liquid is caused to flow through each of the cells **14** of the honeycomb-like base material **10.** Thus, the dispersion liquid can be smoothly applied to the surface of the partition wall. The number of times of the application of the dispersion slurry liquid is appropriately changed depending on the thickness of the carbon dioxide adsorption layer.

Next, the regenerated base material **1R** to which the dispersion slurry liquid has been applied is heated to, for example, from 50°C to 200°C. Thus, the coating film is dried, and is sintered as required. A drying time period is, for example, 0.5 hour or more and 24 hours or less. When the sintering is adopted, the coating film is sintered at, for example, from 80°C to 300°C. A sintering time period is, for example, 1 hour or more and 100 hours or less.

Thus, the carbon dioxide adsorption layer including the porous carrier and the carbon dioxide adsorption material is formed on the regenerated base material **1R** (specifically, the partition wall **13).** When the carbon dioxide adsorption layer is free of a porous carrier, the carbon dioxide adsorption layer may be formed on the regenerated base material **1R** in the same manner as described above except that the carbon dioxide adsorption material is added without addition of the porous carrier to the solvent.

In another embodiment, for example, first, the above-mentioned dispersion slurry liquid is applied onto the regenerated base material **1R** (specifically, the partition wall 13) in the same manner as described above. Next, the coating film on the regenerated base material onto which the dispersion slurry liquid has been applied is dried, and is then heated to, for example, 400°C or more and 800°C or less to be sintered. A sintering time period is, for example, 1 hour or more and 100 hours or less. Thus, a carrier-containing film is formed. Next, the carbon dioxide adsorption material in a liquid form under normal temperature and normal pressure, or a solution of the carbon dioxide adsorption material is applied to the carrier-containing film in the same manner as described above. Thus, the carbon dioxide adsorption material penetrates into, and is supported by, the porous carrier of the carrier-containing film. The carbon dioxide adsorption layer including the porous carrier and the carbon dioxide adsorption material may also be formed on the regenerated base material **1R** in this manner.

In still another embodiment, first, a binder solution is prepared by dissolving the above-mentioned organic binder in the aprotic polar solvent. The aprotic polar solvent can dissolve the above-mentioned organic binder therein and cannot dissolve the above-mentioned carbon dioxide-adsorbable particles (more specifically, the carbon dioxide adsorption material) therein.

Any appropriate organic solvent may be adopted as the aprotic polar solvent. Examples of the aprotic polar solvent include N-methyl-2-pyrrolidone (NMP), dimethylformamide (DMF), dimethylacetamide (DMA), dimethylsulfoxide (DMSO), and tetrahydrofuran (THF). Those aprotic polar solvents may be used alone or in combination thereof.

Of those aprotic polar solvents, N-methyl-2-pyrrolidone (NMP) is preferred. When the aprotic polar solvent includes NMP, the organic binder (particularly, PVDF) can be more smoothly dissolved therein, and the dissolution of the carbon dioxide adsorption material can be stably suppressed.

A solubility parameter distance between the organic binder and the aprotic polar solvent is, for example, 3 or less, preferably 2 or less. When the solubility parameter distance between the organic binder and the aprotic polar solvent is equal to or less than the above-mentioned upper limits, the organic binder can be smoothly dissolved in the aprotic polar solvent. The lower limit of the solubility parameter distance between the organic binder and the aprotic polar solvent is typically 0 or more.

A solubility parameter distance between the carbon dioxide adsorption material and the aprotic polar solvent is, for example, 2 or more, preferably 3 or more, more preferably 4 or more. When the solubility parameter distance between the carbon dioxide adsorption material and the aprotic polar solvent is equal to or more than the above-mentioned lower limits, the dissolution of the carbon dioxide adsorption material in the aprotic polar solvent can be suppressed. The upper limit of the solubility parameter distance between the carbon dioxide adsorption material and the aprotic polar solvent is typically 10 or less.

Next, the above-mentioned carbon dioxide-adsorbable particles are added to be dispersed in the binder solution.

A solution of the organic binder in the aprotic polar solvent in which the carbon dioxide-adsorbable particles are dispersed (particle-dispersed binder solution) is applied to the surface of the regenerated base material 1R by any appropriate method in the same manner as described above.

Thus, the particle-dispersed binder solution is applied to the surface of the regenerated base material (typically, the surface of the partition wall) to form a precursor film. The precursor film includes the above-mentioned carbon dioxide-adsorbable particles, the above-mentioned organic binder, and the above-mentioned aprotic polar solvent.

Next, the aprotic polar solvent in the precursor film is replaced with a poor solvent for the organic binder.

The poor solvent dissolves the organic binder therein to a smaller extent than the above-mentioned aprotic polar solvent (good solvent), and the organic binder is substantially insoluble in the poor solvent. A solubility parameter distance between the organic binder and the poor solvent is typically larger than the solubility parameter distance between the organic binder and the aprotic polar solvent (good solvent). The solubility parameter distance between the organic binder and the poor solvent is, for example, 2 or more, preferably 3 or more, more preferably 4 or more.

Examples of the poor solvent include: protic polar solvents, such as water and alcohols including ethanol, butanol, and isopropyl alcohol (IPA); and fluorocarbons, such as hydrochlorofluorocarbons (HCFC), hydrofluorocarbons (HFC), and hydrofluoroolefins (HFO). Those poor solvents may be used alone or in combination thereof. Of those poor solvents, water is preferred.

Through replacement of the aprotic polar solvent, a film stable for a protic solvent is obtained.

Thus, the carbon dioxide adsorption layer including the carbon dioxide-adsorbable particles and the organic binder can be formed on the surface of the regenerated base material (typically, the surface of the partition wall). After that, the carbon dioxide adsorption layer is dried as required.

In addition, the formation method for the carbon dioxide adsorption layer including the carbon dioxide-adsorbable particles and the organic binder is not limited to the above-mentioned embodiment. For example, first, a binder solution is prepared in the same manner as described above. Next, the above-mentioned porous carrier is added to be dispersed in the binder solution.

Thus, the porous carrier is dispersed in the binder solution, and a binder solution in which the porous carrier is dispersed (carrier-dispersed binder solution) is prepared.

Next, the carrier-dispersed binder solution is applied to the surface of the regenerated base material by the above-mentioned application method. Thus, the carrier-dispersed binder solution is applied to the surface of the regenerated base material (typically, the surface of the partition wall) to form a precursor film. The precursor film includes the above-mentioned porous carrier, the above-mentioned organic binder, and the above-mentioned aprotic polar solvent.

Next, the aprotic polar solvent in the precursor film is replaced with the above-mentioned poor solvent.

Thus, a carrier-containing film is formed on the surface of the regenerated base material (typically, the surface of the partition wall). After that, the carrier-containing film is dried as required. The carrier-containing film includes the above-mentioned porous carrier and the above-mentioned organic binder.

Next, the above-mentioned carbon dioxide adsorption material is supported by the porous carrier in the carrier-containing film. The carbon dioxide adsorption material to be used in this embodiment is preferably in a liquid form under normal temperature and normal pressure. More specifically, the carbon dioxide adsorption material in a liquid form under normal temperature and normal pressure is applied to the carrier-containing film by the above-mentioned application method. Thus, the carbon dioxide adsorption material penetrates into, and is supported by, the porous carrier of the carrier-containing film. Thus, the carbon dioxide-adsorbable particles each including an acid gas adsorption compound and the porous carrier are formed. That is, the carbon dioxide adsorption layer includes the carbon dioxide-adsorbable particles and the organic binder.

The carbon dioxide adsorption layer including the carbon dioxide-adsorbable particles and the organic binder may also be formed on the regenerated base material **1R** in this manner.

Further, an organic binder recovered from the regenerated material powder may be used for the carbon dioxide adsorption layer. When the organic binder recovered from the regenerated material powder is utilized, a manufacturing cost for the carbon dioxide adsorption device can be further reduced.

When the carbon dioxide adsorption layer includes the carbon dioxide-adsorbable particles and the organic binder, the regenerated material powder obtained by pulverizing the carbon dioxide adsorption device includes, for example, the ceramic powder derived from the base material, the carbon dioxide-adsorbable particles derived from the carbon dioxide adsorption layer, and the organic binder derived from the carbon dioxide adsorption layer. When the organic binder is recovered from the regenerated material powder, the regenerated material powder is brought into contact with the above-mentioned aprotic polar solvent. Typically, the regenerated material powder is added to the above-mentioned aprotic polar solvent, and the mixture is stirred. Thus, an organic binder solution is prepared by dissolving the organic binder in the regenerated material powder in the aprotic polar solvent. The ceramic powder and the carbon dioxide-adsorbable particles are substantially free from being dissolved in the aprotic polar solvent.

Next, the ceramic powder and the carbon dioxide-adsorbable particles are preferably separated from the organic binder solution. An example of the separation method is filtration.

After that, the above-mentioned protic polar solvent (typically, water) is added to the organic binder solution, to thereby precipitate the organic binder. Thus, the organic binder can be recovered, and hence can be reused in the reformation step. That is, in the reformation step, an acid gas adsorption layer including the recovered organic binder and the carbon dioxide-adsorbable particles can be formed on the surface of the regenerated base material in the same manner as described above.

The organic binder recovered from the regenerated material powder may include carbon dioxide-adsorbable particles (typically, deactivated carbon dioxide-adsorbable particles) remaining without being separated from the organic binder solution by the above-mentioned separation method. When the organic binder including a small amount of the carbon dioxide-adsorbable particles is used for the reformation of the acid gas adsorption layer, the organic binder may bind to each material (e.g., the ceramic powder or the porous carrier) in the regenerated base material. Accordingly, an improvement in strength of the carbon dioxide adsorption device can be achieved.

Thus, the carbon dioxide adsorption device 100 illustrated in FIG. **1** is regenerated. Such method of regenerating a carbon dioxide adsorption device (acid gas adsorption device) is, in other words, a method of producing a carbon dioxide adsorption device (acid gas adsorption device) including the carbon dioxide adsorption layer (acid gas adsorption layer) having the restored performance. The method of producing a carbon dioxide adsorption device (acid gas adsorption device) includes: the above-mentioned adsorption step; the above-mentioned desorption step; the above-mentioned pulverizing step; and the above-mentioned reformation step. A carbon dioxide adsorption device having excellent CO₂ capture performance (acid gas capture performance) can be produced by such method of producing a carbon dioxide adsorption device (acid gas adsorption device). In addition, the regenerated carbon dioxide adsorption device (acid gas adsorption device) may be repeatedly regenerated by being subjected to the adsorption step and the desorption step in the same manner as described above, and then subjected to the pulverizing step and the reformation step again.

### Industrial Applicability

The method of regenerating an acid gas adsorption device according to each of the embodiments of the present invention can be used for regeneration of an acid gas adsorption device to be used for separation and capture of an acid gas, and particularly, can be suitably used for regeneration of a carbon dioxide adsorption device to be used for a Carbon dioxide Capture, Utilization and Storage (CCUS) cycle.

### Reference Signs List

**1** base material
**1R** regenerated base material
**10** honeycomb-like base material
**13** partition wall
**14** cell
**15** carbon dioxide adsorption layer
**100** carbon dioxide adsorption device

## Claims

1. A method of regenerating an acid gas adsorption device, comprising the steps of:
causing an acid gas to be adsorbed to an acid gas adsorption material by supplying the acid gas to an acid gas adsorption device including a base material, and an acid gas adsorption layer arranged on a surface of the base material, the acid gas adsorption layer including the acid gas adsorption material, so that the acid gas is brought into contact with the acid gas adsorption layer;
causing the acid gas to be desorbed from the acid gas adsorption material;
pulverizing the acid gas adsorption device, which has been subjected to the step of causing the acid gas to be adsorbed and the step of causing the acid gas to be desorbed, to provide a regenerated material powder; and
molding the base material from the regenerated material powder to form an acid gas adsorption layer including an acid gas adsorption material on the surface of the base material.

2. The method of regenerating an acid gas adsorption device according to claim 1, wherein the acid gas is carbon dioxide.

3. The method of regenerating an acid gas adsorption device according to claim 1,
wherein the base material is a honeycomb-like base material including a partition wall configured to define a plurality of cells, and
wherein the acid gas adsorption layer is formed on a surface of the partition wall.

4. The method of regenerating an acid gas adsorption device according to claim 1, wherein a material for forming the base material is selected from cordierite, alumina, mullite, silicon carbide, a silicon-silicon carbide-based composite material, silicon nitride, and a combination thereof.

5. The method of regenerating an acid gas adsorption device according to claim 1, wherein the acid gas adsorption material is selected from a nitrogen-containing compound, a metal organic framework, activated carbon, nitrogen-doped carbon, an alkali compound, a carbonate salt, a hydrogen carbonate salt, zeolite, an ionic liquid, and a combination thereof.

6. The method of regenerating an acid gas adsorption device according to claim 1, wherein the acid gas adsorption layer further includes a porous carrier.

7. The method of regenerating an acid gas adsorption device according to claim 1,
wherein the acid gas adsorption layer includes: particles each including at least the acid gas adsorption material; and an organic binder capable of binding the particles, and
wherein the organic binder is soluble in an aprotic polar solvent, and is substantially insoluble in a protic polar solvent.

8. The method of regenerating an acid gas adsorption device according to claim 7, further comprising the steps of:
dissolving the organic binder in the aprotic polar solvent by bringing the aprotic polar solvent into contact with the regenerated material powder including the organic binder; and
precipitating the organic binder by adding the protic polar solvent to an organic binder solution obtained by dissolving the organic binder in the aprotic polar solvent, to recover the organic binder,
wherein the molding includes forming an acid gas adsorption layer including the recovered organic binder and the particles each including at least the acid gas adsorption material on the surface of the base material molded from the regenerated material powder.

9. A method of producing an acid gas adsorption device, comprising the steps of:
causing an acid gas to be adsorbed to an acid gas adsorption material by supplying the acid gas to an acid gas adsorption device including a base material, and an acid gas adsorption layer arranged on a surface of the base material, the acid gas adsorption layer including the acid gas adsorption material, so that the acid gas is brought into contact with the acid gas adsorption layer;
causing the acid gas to be desorbed from the acid gas adsorption material;
pulverizing the acid gas adsorption device, which has been subjected to the step of causing the acid gas to be adsorbed and the step of causing the acid gas to be desorbed, to provide a regenerated material powder; and
molding the base material from the regenerated material powder to form an acid gas adsorption layer including an acid gas adsorption material on the surface of the base material.
